(19) Europäisches Patentamt
European Patent Office
Office européen des brevets

(11) Veröffentlichungsnummer: **0 380 938 A2**

(12) **EUROPÄISCHE PATENTANMELDUNG**

(21) Anmeldenummer: **90100505.8**

(22) Anmeldetag: **11.01.90**

(51) Int. Cl.[5]: **C08F 210/02, C08F 2/48, C08F 220/44, //(C08F210/02, 220:44),(C08F220/44,210:02)**

(30) Priorität: **24.01.89 DE 3901902**

(43) Veröffentlichungstag der Anmeldung: **08.08.90 Patentblatt 90/32**

(84) Benannte Vertragsstaaten: **DE FR GB IT**

(71) Anmelder: **BAYER AG**
**D-5090 Leverkusen 1 Bayerwerk(DE)**

(72) Erfinder: **Buback, Michael, Dr. Prof.**
**Alte Dorfstrasse 57e**
**D-3406 Bovenden(DE)**
Erfinder: **Brackemann, Holger, Dr.**
**Wiclefstrasse 23**
**D-1000 Berlin 23(DE)**
Erfinder: **Von der Linden, Bernd Volker, Dr.**
**Am Borsberg 25**
**D-5090 Leverkusen(DE)**
Erfinder: **Casper, Rudolf, Prof.Dr.**
**St. Ingberter Strasse 3**
**D-5090 Leverkusen(DE)**
Erfinder: **Obrecht, Werner, Dr.**
**Holderbergerstrasse 108**
**D-4130 Moers 2(DE)**

(54) **Verfahren zur Polymerisation von Ethylen und Acrylnitril mit Hilfe von Laserstrahlen.**

(57) Laserstrahlen eröffnen bei der Copolymerisation von Ethylen, Acrylnitril und gegebenenfalls weiteren Monomeren bislang verschlossene Möglichkeiten.

EP 0 380 938 A2

# Verfahren zur Polymerisation von Ethylen und Acrylnitril mit Hilfe von Laserstrahlen

Die Erfindung betrifft ein Verfahren zur Herstellung von Ethylen/Acrylnitril-Copolymerisaten durch Polymerisation von Ethylen und Acrylnitril unter Energiezufuhr in Form von Laserstrahlen.

Ethylen/Acrylnitril-Copolymerisate sind bekannt. Sie eignen sich als Mischungskomponente von Kautschuken und für die Herstellung von Formkörpern, wie von Kabeln und Gummiartikeln.

Die US-PS 3 264 275 beschreibt beispielsweise Ethylen/Acrylnitril-Copolymerisate, die durch Hochdruckpolymerisation der Monomeren in Gegenwart üblicher Radikalbildner oder mittels UV-Bestrahlung hergestellt werden können.

Während bei der Hochdruckpolymerisation von Ethylen die Raum/Zeit-Ausbeuten beträchtlich sind, können bei Mitverwendung von Acrylnitril aus bisher nicht ganz verständlichen Gründe vergleichbare Verhältnisse nur mit ungewöhnlich großen Initiatormengen erzielt werden. Dabei besteht dann nicht nur im Moment die Gefahr einer Initiatorüberdosierung mit dem Risiko einer explosionsartigen Verpuffung, sondern man erhält nach diesem Verfahren auch nur stark klebende Produkte.

Überraschenderweise wurde nun gefunden, daß die durch Acrylnitril bei der Copolymerisation von Ethylen und Acrylnitril hervorgerufenen Schwierigkeiten durch Verwendung von Laserstrahlen überwunden werden können.

Die Methode, Polymerisationsreaktionen statt durch übliche radikalbildende Polymerisationsinitiatoren durch energiereiche Strahlung zu initiieren, hat auf manchen Gebieten in großem Umfang konventionelle Verfahren verdrängt (Papierbeschichtung, Möbelbeschichtung). Auch die prinzipielle Möglichkeit, Polymerisationsreaktionen allgemein durch Laserstrahlen zu initiieren, ist in der wissenschaftlichen Literatur vielfältig diskutiert worden. So ist beispielsweise über Laser-initiierte Homopolymerisationen von Ethylen und von Acrylnitril berichtet worden; vergl. Methoden der Organischen Chemie (Houben-Weyl), Bd. E20, Georg Thieme Verlag, Stuttgart 1987, S. 74 - 89, und dort zitierte Literatur.

Die Tatsache, daß eine praktische industrielle Anwendung Laser-initiierter Polymerisationsverfahren zur Herstellung von Ethylen/Acrylnitril-Copolymerisaten bisher nicht bekannt geworden ist, offenbart eine deutliche Reserve der Fachwelt, bei der Polymerisation von Ethylen/Acrylnitril-Mischungen die Initiierung per Laser vorzunehmen. Jedenfalls konnte der Fachmann nicht ahnen, daß die bei der Ethylen/Acrylnitril-Polymerisation auftretenden Schwierigkeiten durch Verwendung von Lasern behoben werden könnten.

Gegenstand der Erfindung ist also ein Verfahren zur Herstellung von Ethylen/Acrylnitril-Copolymerisaten mit Gehalten an copolymerisierten Einheiten von

a) 20 bis 90, vorzugsweise 40 bis 70, Gew.-% Ethylen und

b) 10 bis 80, vorzugsweise 30 bis 60, Gew.-% Acrylnitril, wobei bis zu 20 Mol-%. der Acrylnitrileinheiten durch copolymerisierte Einheiten eines oder mehrerer anderer Monomerer mit mindestens einer copolymerisierbaren C=C-Doppelbindung pro Molekül ersetzt sein können, dadurch gekennzeichnet, daß das Verfahren unter dem Einfluß von Laserstrahlen durchgeführt wird.

Die obigen Gew.-%-Angaben beziehen sich auf die Summe der Komponenten a) und b).

Geeignete "andere Monomere" im Sinne der Erfindung sind copolymerisierbare Verbindungen, deren C=C-Doppelbindungen durch den verwendeten Laser angeregt werden können. Als "andere Monomere" wird man also nicht solche Verbindungen auswählen, deren C=C-Doppelbindungen durch den verwendeten Laser nicht angeregt werden, so daß die absorbierte Energie im wesentlichen zu einer Erwärmung, aber nicht zu einer Polymerisation führt.

Bevorzugt "andere Monomere", die das Acrylnitril teilweise ersetzen können, umfassen Kohlenmonoxid, fluorierte und chlorierte Kohlenwasserstoffe mit (mindestens) einer copolymerisierbaren C=C-Doppelbindung pro Molekül, ethylenisch ungesättigte Ether und insbesondere Verbindungen der Formel

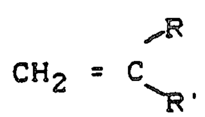 (1)

mit 3 bis 12 C-Atomen pro Molekül,
wobei
R H, $CH_3$ und
R' $-COOH$, $-CONH_2$, $-COOCH_2OH$,

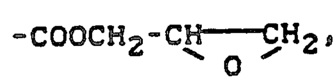

$-COOCH_2CH=CH_2$, $-COOCH_2CH_2Cl$, $CONHCH_2CH=CH_2$, $-COOCO-C(CH_3)=CH_2$, $-COOCH_3$, $-COOC_2H_5$, $-COOC_3H_7$, $COOC_4H_9$, $-O-CO-CH_3$, $-O-COC_2H_5$, $-O-COC_3H_7$, $-O-CO-C_4H_9$ bedeuten.

Besonders bevorzugte copolymerisierbare "andere Monomere" sind beispielsweise Styrol,

Methylmethacrylat, Methacrylnitril, Methylacrylat, Ethylacrylat, Acrylsäure, Methacrylsäure, Ethacrylsäure, Butadien, Isopren und Gemische aus zwei oder mehreren dieser Monomeren Styrol, Methacrylnitril, Butadien und Methylmethacrylat sind die bevorzugtesten "anderen Monomeren".

Für die Herstellung öl- und hitzebeständiger Kautschuke besonders bewährt haben sich Carboxyl-, Amid-, Nitril-und Estergruppen-haltige Monomere, wobei Carboxyl-, Amid- und Nitrilgruppen-haltige Monomere eine hohe Ölbeständigkeit und Estergruppen-haltige Monomere, wie z.B. Acrylsäure- bzw. Methacrylsäure-$C_1$-$C_6$-alkylester, eine gute Hitzebeständigkeit ermöglichen. Gute Kautschuke sind daher Copolymerisate aus copolymerisierten Einheiten von

A. 20 bis 90, vorzugsweise 40 bis 70 Gew.-%, bezogen auf die Summe A + B, Ethylen und

B. 80 bis 10, vorzugsweise 60 bis 30 Gew.-%, bezogen auf die Summe A + B, von

I. 80 bis 100 Gewichtsteilen Acrylnitril und

II. 20 bis 0 Gewichtsteilen

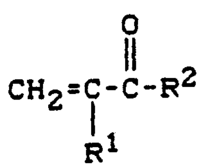

(2)

mit

$R^1$ = H, $CH_3$,

$R^2$ = OH, $NH_2$, O-$C_1$-$C_6$-Alkyl, wobei sich die Gewichtsteile der Komponenten I und II auf 100 ergänzen sollen.

Generell kann man durch die Wahl der Wellenlänge der verwendeten Laserstrahlen die Eindringtiefe der Strahlen in das Reaktionsgemisch regulieren. Verwendet man also eine Wellenlänge, die im oder nahe dem Absorptionsmaximum der Monomeren liegt, so ist die Eindringtiefe minimal; unter ungünstigen Umständen werden die Monomeren thermisch zersetzt. Man verwendet deshalb vorzugsweise eine Wellenlänge, die - vom Langwelligen aus betrachtet - weit vor der Absorptionskante liegt, mit anderen Worten: eine Wellenlänge, bei der die Monomeren merklich, aber noch nicht stark absorbieren. Die Eindringtiefe ist dann relativ groß.

Werden neben Ethylen und Acrylnitril noch "andere Monomere" eingesetzt, so hat man auf die Absorptionskoeffi zienten der "anderen Monomeren" zu achten. Während nämlich Ethylen und Acrylnitril sehr ähnliche Absorptionskoeffizienten besitzen, haben viele "andere Monomere" Absorptionskoeffizienten, die sich von denen des Ethylens und des Acrylnitrils beträchtlich unterscheiden. Man wird in diesen Fällen in der Regel mit möglichst langwelligen Laserstrahlen arbeiten.

Die erfindungsgemaße Copolymerisation kann bei Temperaturen von 20 bis 350, vorzugsweise von 50 bis 250 und insbesondere von 200 bis 250 °C, durchgeführt werden.

Über die Temperaturabhängigkeit des Acrylnitrilgehalts im erhaltenen Copolymerisat läßt sich folgendes sagen: Mit steigender Temperatur fällt der Gehalt an copolymerisiertem Acrylnitril bei gegebenem Ethylen/Acrylnitril-Verhältnis im Ausgangsmonomerengemisch. Setzt man beispielsweise ein Monomerengemisch mit 1 Gew.-% Acrylnitril ein, so erhält man bei 10 % Umsatz und 110 °C ein Copolymerisat mit 10,5 Gew.-% copolymerisiertem Acrylnitril, bei dem gleichen Umsatz und 170 °C dagegen ein Copolymerisat mit 9,6 Gew.-% copolymerisiertem Acrylnitril. Bei Einsatz eines Monomerengemisches mit 2 Gew.-% Acrylnitrilgehalt erhält man unter den gleichen Bedingungen Copolymerisate mit 20,1 Gew.-% (110 °C) bzw. 18,2 Gew.-% (170 °C) copolymerisiertem Acrylnitril.

Die Copolymerisation kann als Lösungspolymerisation erfolgen. Auf diese Weise kann man das Ausfallen des Copolymerisats (wichtig insbesondere bei höheren Acrylni trilgehalten) vermeiden. Das benutzte Lösungsmittel sollte im Wellenlängenbereich des verwendeten Lasers nicht absorbieren. Geeignete Lösungsmittel sind Ether wie Tetrahydrofuran und Dioxan, Ketone wie Aceton und Methylethylketon, chlorierte Kohlenwasserstoffe wie Dichlormethan, Chlorbenzol, o-Dichlorbenzol, Fluorchlorkohlenwasserstoffe und Fluorkohlenwasserstoffe. Als Lösungsmittel besonders günstig sind unter Reaktionsbedingungen überkritische Gase wie Ammoniak, Kohlenmonoxid und Schwefeldioxid. Lösungsmittel für die Laserinduzierte Polymerisation sind dann besonders geeignet, wenn sie im Bereich der verwendeten Laserstrahlen nicht absorbieren.

Bevorzugt ist jedoch das Masse-Hochdruckverfahren.

Das erfindungsgemäße Verfahren wird in der Regel bei Drucken von 500 bis 3.000, vorzugsweise von 2.500 bis 3.000 bar, durchgeführt.

Nach einer bevorzugten Ausführungsform des Verfahrens arbeitet man in Abwesenheit von Polymerisationsinitiatoren und führt die zur Erzeugung von Radikalen notwendige Energie allein durch Laserstrahlen zu Dieses Verfahren eignet sich besonders für die kontinuierliche Verfahrensweise, wobei man natürlich dafür Sorge zu tragen hat, daß die Monomeren für die Laserstrahlen auch gut erreichbar sind Rohr- und Loopreaktoren sind für diesen Zweck besonders geeignet.

Nach einer bevorzugten zweiten Ausführungsform werden zusätzlich radikalbildende Polymerisationsinitiatoren in Mengen eingesetzt, wie sie von der Ethylen-Hochdruckpolymerisation bekannt sind, d.h. 0.001 bis 2 Mol-%, vorzugsweise 0.001 bis 1

Mol-%, bezogen auf zu polymerisierende Monomere. Man darf sich vielleicht vorstellen, daß nach diesem Verfahren ein gewisser "Grundumsatz" nach dem üblichen Mechanismus einer radikalischen Copolymerisation abläuft, während ein "Restumsatz" durch die Laserstrahlen initiert wird.

Es handelt sich also um eine Mischform der oben erwähnten ersten Ausführungsform und der bekannten Copolymerisation des Standes der Technik. Die Reaktionstemperatur wird bei diesem Verfahren durch die Zerfallstemperatur des verwendeten Polymerisationsinitiators vorgegeben.

Nach einer bevorzugten dritten Ausführungsform des erfindungsgemäßen Verfahrens wird der Zerfall des Polymerisationsinitiators durch die Laserstrahlen derart beschleunigt, daß man die Reaktionstemperatur merklich senken kann. Bei diesem Verfahren muß der Initiator durch den Laser gezielt angeregt werden, d.h. das Absorptionsspektrum des Initiators muß im Wellenlängenbereich des verwendeten Lasers liegen und vorzugsweise in diesem Bereich ein Maximum aufweisen. Dieses Verfahren ist mit dem Vorteil einer geringeren Verzweigung der erhaltenen Copolymerisate verbunden; sie besitzen deshalb eine höhere Kristallinität und damit verbesserte Festigkeiten.

Für das erfindungsgemäße Verfahren gegebenenfalls mitverwendete bevorzugte Polymerisationsinitiatoren umfassen Diacylperoxide wie Diacetylperoxid, Dibenzoylperoxid, Di-p-chlorbenzoylperoxid, Di-laurylperoxid, Peroxyester wie tert.-Butylperoxydicarbonat, tert.-Butylperpivalat, tert.-Amylperpivalat, tert.-Butylperacetat, tert.-Butyl-2-ethylhexanoat, tert.-Butylperisononanoat, tert.-Amylperneodecanoat und tert.-Butylperbenzoat, Alkylperoxide wie Di-tert.-butyl-peroxid, Bis-(tert.-butylperoxybutan), Dicumylperoxid, tert.-Butylcumylperoxid, Hydroperoxide wie Cumolhydroperoxid, tert.-Butylhydroperoxid, Ketonperoxide wie Cyclohexanonhydroperoxid, Methylethylketonhydroperoxid, Acetylacetonperoxid, oder Azoverbindungen wie Azobisisobutyronitril und Azobisvaleronitril.

Die bevorzugtesten Peroxide sind Di-tert.-butylperoxid, tert.-Butylperpivalat und tert.-Butylperisononanoat.

Man kann auch Mischungen aus Sauerstoff (Luft) und einem oder mehreren Peroxiden verwenden, jedoch arbeitet man vorzugsweise in Abwesenheit von Sauerstoff, d. h. bei einem Sauerstoffgehalt unter 100, vorzugsweise unter 10 und insbesondere unter 1 Vol.-ppm Sauerstoff.

Für das erfindungsgemaße Verfahren können sowohl Pulslaser als auch kontinuierlich emittierende Laser verwendet werden.

Für das erfindungsgemäße Verfahren bevorzugte Laser emittieren im Wellenlängenbereich von 180 bis 400, vorzugsweise 193 bis 351 nm. Durch die Wahl der Intensität der Laserpulse und die Pulsfolgerate können die Raum /Zeit-Ausbeuten beeinflußt werden. Diese werden sich u.a. danach richten, ob man nach einem diskontierlichen oder nach einem kontinuierlichen Polymerisationsverfahren arbeiten möchte. Die Intensität der Laserpulse beträgt in der Regel 1 m J bis 1 J, die Pulsbreite bis 50 nsec und die Folgerate 0,1 bis 10 kHz (falls man keinen kontinuierlich emittierenden Laser verwendet).

Die erfindungsgemäß hergestellten Ethylen/Acrylnitril-Copolymerisate können mittlere Gewichtsmittel-Molekulargewichte $\overline{M}_w$ von 5.000 bis 1000.000, vorzugsweise von 50.000 bis 300.000, besitzen.

Die Molekulargewichtsverteilung wird durch Gelpermeationschromatographie, gekoppelt mit Viskosimetrie wie folgt ermittelt:

Die Proben werden mit einer Konzentration von 10 g/l in o-Dichlorbenzol (stabilisiert mit 1 g/l Jonol) angesetzt und nach 24 Stunden bei 140 °C ultrazentrifugiert (1 Stunde bei 20.000 $min^{-1}$). Das abgetrennte Sediment wird bei 60 °C im Vakuum getrocknet und ausgewogen $\gamma_{UZ}$). Von der Sollösung wird zusätzlich mit einem automatisierten Ubbelohde-Kappilarviskosimeter der Staudinger-Index ($[\eta]_{Sol}$) in o-Dichlorbenzol bei 140 °C bestimmt.

Die gelchromatographische Trennung erfolgt an 8 hintereinander geschalteten Styragel®-Säulen (Porengröße $10^2/10^2/10^3/10^3/10^4/10^4/10^5/10^6$ nm; Gesamtlänge 976 cm). 2,0 ml der mit o-Dichlorbenzol auf c = 2 g/l verdünnten Sollösung werden nach Filtration durch einen Membranfilter mit einem Porendurchmesser von 1,2 µm aufgegeben und mit o-Dichlorbenzol (Flußgeschwindigkeit 0,5 ml/min) eluiert. Als konzentrationsproportionaler Detektor dient ein Refraktometer oder ein IR-Filterphotometer bei $\lambda$ = 3,45 µm.

Gekoppelt an die gelchromatographische Trennung wird mit jeweils 5 ml des Eluates - entsprechend einem count im Gelchromatogramm - automatisch eine Viskositätsmessung in einem modifizierten Ubbelohde-Viskosimeter durchgeführt.

Während einer gelchromatographischen Untersuchung fallen 75 Eluatfraktionen an, von denen ca. 20 bis 30 die aufgetrennte Probe enthalten. Die Berechnung der Molekulargewichtsverteilung aus den refraktometrischen und viskosimetrischen Daten erfolgt anhand bekannter Konstanten mit Hilfe einer universellen Eichkurve nach der Methode von Benoit (H. Benoit, P. Rempp, Z. Grubisic, J. Polym. Sci., Polym. Lett Ed. 3, 77 (1965); Polystyrol-Standards im Molekulargewichtsbereich von 600 bis 10 000 000; Aufstellung der Eichkurve gemäß der Gleichung

$$\log ([\eta] \cdot M) = f (V_E)$$

$[\eta]$ = Staudinger-Index, bestimmt in o-Dichlorbenzol bei 140 °C in einem Ubbelohde-Kappilarviscosimeter

M = Molekulargewicht
$V_E$ = Elutionsvolumen in 5 ml-Einheiten).

Die erfindungsgemäß hergestellten Copolymerisate eignen sich u.a. als Fließverbesserer für Rohöle und Mitteldestillate (DIN 7728 T1), als Schmelzklebstoffe und als Mischungskomponente für Thermoplaste, Duroplaste und Kautschuke.

Beispiele

Die Polymerisationen wurden in einer beheizbaren Hochdruckzelle [beschrieben bei M. Buback, Z. Naturforsch. 39 a, 399 (1984)] mit einem Innenvolumen von 2,1 $cm^3$ durchgeführt. Die Bestrahlung erfolgte mit einem Exciplex-Laser (Wellenlänge 248 nm) mit einer Pulsenergie von ca. 9 m J und einer mittleren Laserpuls-Folgerate von 0,25 Hz durch ein kreisförmiges Saphirfenster mit einem Durchmesser von 10 nm.

Beispiel 1

Pro Stunde wurden 151 ml eines Gemisches aus 98,93 Gew.-% Ethylen und 1,07 Gew.-% (0,57 Mol-%) Acrylnitril geleitet. Der Druck betrug 2.450 bar, die Temperatur 230 °C.

Nach einer Reaktionszeit von 72 Minuten waren 650 mg eines farblosen, nicht-klebrigen Ethylen/Acrylnitril-Copolymerisats mit einem Acrylnitrilgehalt von 19,7 Gew.-% (11,5 Mol-%.) entstanden.

Beispiel 2

Beispiel 1 wurde wiederholt mit dem Unterschied, daß man ein Gemisch aus 98,5 Gew.-% Ethylen und 1,5 Gew-% (0,8 Mol-%) Acrylnitril einsetzte.

Es entstand ein farbloses, nicht klebendes Copolymerisat mit einem Acrylnitrilgehalt von 25 Gew.-% (15 Mol-%).

**Ansprüche**

1. Verfahren zur Herstellung von Ethylen/Acrylnitril-Copolymerisaten mit Gehalten an copolymerisierten Einheiten von
a) 20 bis 90, vorzugsweise 40 bis 70, Gew.-% Ethylen und
b) 10 bis 80, vorzugsweise 30 bis 60, Gew.-% Acrylnitril, wobei bis zu 20 Mol-% der Acrylnitrileinheiten durch copolymerisierte Einheiten eines oder mehrerer anderer Monomeren mit mindestens einer copolymerisierbaren C = C-Doppelbindung pro Molekül ersetzt sein können,
dadurch gekennzeichnet, daß das Verfahren unter dem Einfluß von Laserstrahlen durchgeführt wird.

2. Verfahren nach Anspruch 1 unter einem Druck von 500 bis 3.000 bar.

3. Verfahren nach Ansprüchen 1 und 2 bei einer Temperatur von 20 bis 350 °C.

4. Verfahren nach Ansprüchen 1 bis 3 unter Verwendung von Laserlicht einer Wellenlänge von 180 bis 400 nm.